# EUROPÄISCHE PATENTSCHRIFT

(11) **EP 1 127 400 B1**
(45) Veröffentlichungstag und Bekanntmachung des Hinweises auf die Patenterteilung: **11.02.2004**
(21) Anmeldenummer: 99942740.4
(22) Anmeldetag: 01.07.1999
(51) Int. Cl.: H02K 15/02, H02K 1/26, H02K 1/16

(54) **VERFAHREN ZUM HERSTELLEN EINES LÄUFERS ODER STÄNDERS EINER ELEKTRISCHEN MASCHINE AUS BLECHZUSCHNITTEN**
METHOD FOR PRODUCING A ROTOR OR A STATOR OF AN ELECTRIC MACHINE FROM SHEET BLANKS
PROCEDE PERMETTANT DE PRODUIRE UN ROTOR OU UN STATOR D'UNE MACHINE ELECTRIQUE A PARTIR DE SECTIONS DE TOLES

(30) Priorität: 06.11.1998 DE 19851217
(43) Veröffentlichungstag der Anmeldung: 29.08.2001
(73) Patentinhaber: ROBERT BOSCH GMBH, 70442 Stuttgart (DE)
(72) Erfinder: HENSCHEL, Matthias, D-77836 Rheinmuenster (DE); HEYDER, Martin, D-77815 Bühl-Eisental (DE)
(86) Internationale Anmeldenummer: PCT/DE1999/001922
(87) Internationale Veröffentlichungsnummer: WO 2000/028644

(56) Entgegenhaltungen:
- PATENT ABSTRACTS OF JAPAN vol. 005, no. 163 (E-078), 20. Oktober 1981 (1981-10-20) & JP 56 091654 A (TOSHIBA CORP), 24. Juli 1981 (1981-07-24)

## Beschreibung

### Stand der Technik

Die Erfindung geht aus von einem Verfahren nach der Gattung des Patentanspruchs 1.

Es ist schon ein solches Verfahren zur Herstellung eines Läufers einer elektrischen Maschine bekannt, bei dem die mit einem Stempel ausgestanzten Blechzuschnitte punktsymmetrisch ausgebildet sind (DE 32 46 356 A1). Die Blechzuschnitte sind im Läuferblechpaket, soweit dies die geometrische Ausbildung der Zuschnitte zuläßt, per Zufallsverteilung oder gegenüber dem nächsten Blechzuschnitt in Umfangsrichtung um einen bestimmten Winkel verdreht angeordnet. Hierdurch soll sich die durch den Walzvorgang der Bleche erzeugte magnetische Anisotropie weitgehend ausgleichen. Bei unsymmetrischen Blechzuschnitten versagt jedoch dieses Verfahren, da die Nichtverdrehbarkeit zu einer Gleichausrichtung der magnetischen Vorzugsrichtung aller Blechzuschnitte führt.

### Vorteile der Erfindung

Das erfindungsgemäße Verfahren mit den Verfahrensschritten nach Patentanspruch 1 hat demgegenüber den Vorteil, daß in einem Arbeitsschritt zwei deckungsgleiche Blechzuschnitte erzeugt werden, welche entsprechend dem Winkel der Blechstreifenverdrehung unterschiedlich verlaufende magnetische Vorzugsrichtungen aufweisen, so daß hierdurch beim paarweisen Stapeln der Blechzuschnitte zu einem Läuferoder Ständerblechpaket ein weitgehendes Aufheben der magnetischen Anisotropie erzielt werden kann. Durch das mehrlagige Schneiden der Blechzuschnitte in einem Schneidvorgang, das heißt mittels eines Stempels, werden außerdem Werkzeugkosten gespart, da andernfalls zwei Schnittwerkzeuge erforderlich wären. Ferner werden die Herstellkosten für ein Blechpaket gesenkt, da pro Schneidvorgang gleichzeitig mehrere Blechzuschnitte erzeugt werden.

In den Unteransprüchen sind vorteilhafte Weiterentwicklungen des erfindungsgemäßen Verfahrens angegeben.

### Zeichnung

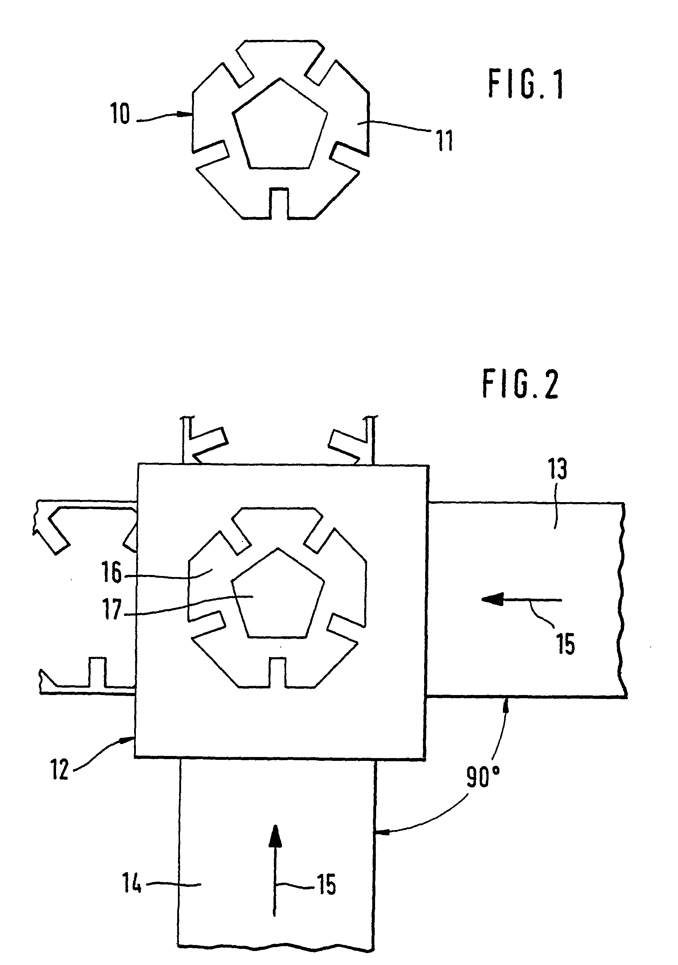

Ein erfindungsgemäßes Verfahrensbeispiel ist in der nachfolgenden Beschreibung anhand der Zeichnung näher erläutert. Es zeigen Figur 1 in der Draufsicht ein aus deckungsgleichen Blechzuschnitten geschichtetes Ständerblechpaket und Figur 2 schematisch ein mit zwei Walzblechstreifen beschicktes Schnittwerkzeug in der Draufsicht.

### Beschreibung des Verfahrensbeispiels

Ein in Figur 1 gezeigtes Ständerblechpaket 10 besteht aus einteiligen, deckungsgleich aufeinander geschichteten Blechzuschnitten 11, welche nicht punktsymmetrisch ausgebildet sind, das heißt die Blechzuschnitte sind nicht durch Drehen um einen Winkel von weniger als 360° deckungsgleich anzuordnen. Derartige Blechzuschnitte werden aus Walzblechstreifen ausgeschnitten, welche aufgrund von im Zuge ihrer Herstellung liegenden Walzvorgängen eine magnetische Vorzugsrichtung aufweisen. Ein aus Blechzuschnitten mit gleicher magnetischer Vorzugsrichtung gebildetes Blechpaket würde daher eine in allen Blechzuschnitten gleichgerichtet verlaufende magnetische Vorzugsrichtung besitzen. Dies hätte ein nachteiliges Leistungs- und Geräuschverhalten der das Blechpaket aufweisenden Maschine zur Folge.

Erfindungsgemäß sind die Blechzuschnitte 11 des Ständerblechpakets 10 mit einem in Figur 2 schematisch dargestellten Schnittwerkzeug 12 aus zwei Walzblechstreifen 13 und 14 hergestellt, welche dem Werkzeug um einen Winkel von 90° gegeneinander verdreht zugeführt werden. Die beiden Walzblechstreifen 13 und 14 weisen die gleiche, durch einen in ihrer Längsrichtung sich erstreckenden Pfeil 15 verdeutlichte magnetische Vorzugsrichtung auf. Die Pfeile 15 stellen zugleich die Vorschubrichtung der Walzblechstreifen 13 und 14 dar. Die beiden Walzblechstreifen 13 und 14 werden aufeinanderliegend durch das Schnittwerkzeug 12 hindurchgeführt. Ein Stempel 16 des Schnittwerkzeugs 12 schneidet in einem Schneidvorgang aus den beiden Walzblechstreifen 13 und 14 zwei deckungsgleiche Blechzuschnitte 11 aus. Derartige Paare von Blechzuschnitten 11 bilden aufeinandergeschichtet das Ständerblechpaket 10. Dabei weisen die Blechzuschnitte abwechselnd um 90° zueinander verdreht verlaufende magnetische Vorzugsrichtungen auf. Eine magnetische Anisotropie des Ständerblechpakets 10 ist somit weitgehend ausgeglichen.

In der Praxis wird man als Schnittwerkzeug 12 einen Folgeschnitt einsetzen, der mit jeweils einem separaten Stempel in einem ersten Arbeitsschritt aus den beiden Walzblechstreifen 13 und 14 einen Kernzuschnitt 17 ausschneidet. In einem zweiten Arbeitsschritt werden dann, wie vorstehend erwähnt, mit dem Stempel 16 des Schnittwerkzeugs 12 die Blechzuschnitte 11 gleichzeitig paarweise aus den Walzblechstreifen 13 und 14 ausgeschnitten. Auch ist es möglich, in einem separaten Schnittwerkzeug zuerst den Kernzuschnitt 17 aus den beiden Walzblechstreifen 13 und 14 getrennt voneinander auszuschneiden, um anschließend derartig vorbereitete Walzblechstreifen 13 und 14 dem Schnittwerkzeug 12 zuzuführen und mit diesem die Blechzuschnitte 11 paarweise zu erzeugen.

Abweichend vom Verfahrensbeispiel können außerdem, sofern dies die konstruktive Gestaltung des Ständers der elektrischen Maschine zuläßt, die Blechzuschnitte 11 aus Blechstreifen ausgeschnitten werden, welche unter einem von 90° abweichenden Winkel dem Schnittwerkzeug 12 zugeführt werden. Ferner kann das erfindungsgemäße Verfahren auch Anwendung finden beim Herstellen von aus einteiligen, deckungsgleichen Blechzuschnitten geschichteten Läufern elektrischer Maschinen. Eine Weiterentwicklung des erfindungsgemäßen Verfahrens kann auch darin bestehen, Blechzuschnitte aus mehr als zwei Walzblechstreifen gemeinsam durch mehrlagiges Schneiden herzustellen.

## Patentansprüche

1. Verfahren zum Herstellen eines Läufers oder Ständers einer elektrischen Maschine aus einteiligen, deckungsgleichen Blechzuschnitten (11), die aus Walzblechstreifen (13, 14) mit magnetischer Vorzugsrichtung (15) zu einem Läufer- oder Ständerblechpaket (10) geschichtet werden,
**dadurch gekennzeichnet,**
**daß** die Blechzuschnitte (11) aus übereinanderliegenden Walzblechstreifen (13, 14), welche um einen Winkel gegeneinander verdreht sind, deckungsgleich in einem Schneidvorgang gemeinsam ausgeschnitten werden.

2. Verfahren nach Anspruch 1, **dadurch gekennzeichnet, daß** wenigstens zwei Walzblechstreifen (13, 14) gleichzeitig durch ein Schnittwerkzeug (12) hindurchgeführt werden.

3. Verfahren nach Anspruch 1, **dadurch gekennzeichnet, daß** die Walzblechstreifen (13, 14) vorzugsweise um einen Winkel von 90° gegeneinander verdreht sind.

## Claims

1. Method of producing a rotor or stator of an electrical machine from one-piece, congruent sheet-metal blanks (11) which are stacked from rolled sheet-metal strips (13, 14) having a preferred direction (15) of magnetization to form a laminated rotor or stator core (10), **characterized in that** the sheet-metal blanks (11) are cut out together in a congruent manner in one cutting operation from rolled sheet-metal strips (13, 14) which lie one above the other and are rotated relative to one another by an angle.

2. Method according to Claim 1, **characterized in that** at least two rolled sheet-metal strips (13, 14) are passed through a cutting tool (12) simultaneously.

3. Method according to Claim 1, **characterized in that** the rolled sheet-metal strips (13, 14) are preferably rotated relative to one another by an angle of 90°.

## Revendications

1. Procédé permettant de produire un rotor ou un stator d'une machine électrique à partir de sections de tôle (11) distinctes, de même surface de couverture, qui sont empilées pour former un paquet de tôle pour rotor ou stator (10) à partir de bandes de tôle laminée (13, 14) ayant un sens magnétique préférentiel (15),
**caractérisé en ce que**
les sections de tôle (11) sont découpées avec des surfaces de couverture égales lors d'un processus de découpe commun, dans des bandes de tôles laminées (13, 14) superposées et décalées angulairement l'une par rapport à l'autre.

2. Procédé selon la revendication 1,
**caractérisé en ce qu'**
au moins deux bandes de tôle laminée (13, 14) sont introduites simultanément dans un outil de découpe (12).

3. Procédé selon la revendication 1,
**caractérisé en ce que**
les bandes de tôle laminée (13, 14) présentent entre elles de préférence un décalage de positionnement de 90°.
